# EUROPEAN PATENT APPLICATION

(11) **EP 4 395 429 A1**
(43) Date of publication of application: **03.07.2024**
(21) Application number: 22874562.6
(22) Date of filing: 02.09.2022
(51) Int. Cl.: H04W 56/00, H04B 7/185

(54) **SATELLITE COMMUNICATION METHOD AND APPARATUS**

(30) Priority: 29.09.2021 CN 202111153109
(71) Applicant: Huawei Technologies Co., Ltd., Shenzhen, Guangdong 518129 (CN)
(72) Inventor: CHEN, Ying, Shenzhen, Guangdong 518129 (CN); SONG, Xinghua, Shenzhen, Guangdong 518129 (CN); QIAO, Yunfei, Shenzhen, Guangdong 518129 (CN); WANG, Jun, Shenzhen, Guangdong 518129 (CN)
(74) Representative: Isarpatent
(86) International application number: PCT/CN2022/116921
(87) International publication number: WO 2023/051171

(57) **Abstract**

This application discloses a satellite communication method and apparatus. The method includes: starting a first timer; receiving configuration information from a network device, where the configuration information carries information about a preconfigured uplink resource PUR, the information about the PUR carries duration of a second timer, and effective time of the second timer is within effective duration of the first timer; and sending uplink data by using the PUR before the first timer expires and before the second timer expires. According to the method provided in this application, an internet of things (internet of things, IoT) network and satellite communication can be better integrated.

## Description

This application claims priority to Chinese Patent Application No. 202111153109.5, filed with the China National Intellectual Property Administration on September 29, 2021 and entitled "SATELLITE COMMUNICATION METHOD AND APPARATUS", which is incorporated herein by reference in its entirety.

### TECHNICAL FIELD

This application relates to the field of communication technologies, and in particular, to a satellite communication method and apparatus.

### BACKGROUND

Compared with terrestrial communication, satellite communication has its unique advantages: For example, a wider coverage area can be provided; and for another example, a satellite base station is not vulnerable to natural disasters or damage by external forces. Therefore, it will be a trend to support both terrestrial communication and satellite communication.

In addition, because internet of things (internet of things, IoT) has communication features such as data burst, delay insensitivity, massive connections, and wide coverage, compared with other communication scenarios of a 5th generation (5th generation, 5G) network (for example, enhanced mobile broadband (enhanced mobile broadband, eMBB) or ultra-reliable low-latency communication (ultra-reliable low-latency communication, URLLc)), the IoT with these features can be better supported by the satellite communication.

Therefore, how to better integrate the IoT and the satellite communication is urgently resolved.

### SUMMARY

This application provides a satellite communication method and apparatus, which can better integrate an internet of things (internet of things, IoT) network and satellite communication.

According to a first aspect, an embodiment of this application provides a satellite communication method, where the method includes:
starting a first timer; receiving configuration information from a network device, where the configuration information carries information about a preconfigured uplink resource (preconfigured uplink resource, PUR), the information about the PUR carries duration of a second timer, and effective time of the second timer is within effective duration of the first timer; and before the first timer expires and before the second timer expires, sending uplink data by using the PUR.

In this embodiment of this application, the first timer is set, and this effectively improves a case in which a terminal device always needs to listen to information about the first timer (for example, including ephemeris information or common (timing advance, TA) information). For example, the terminal device may not always need to listen to the information about the first timer within the effective duration of the first timer, and this effectively reduces power consumption. In addition, it is ensured that the terminal device can listen to the information about the first timer in connected mode (for example, listen to the information when the first timer or the second timer is about to expire). Therefore, the terminal device can further effectively update the duration of the first timer in time. The second timer is set, so that the terminal device may send the uplink data within effective duration of the second timer, and this effectively ensures validity of the PUR. Therefore, in this embodiment of this application, before the first timer expires and before the second timer expires, the terminal device sends the uplink data by using the PUR, so that validity of the PUR can be ensured, and validity of the TA can be ensured. Therefore, effectiveness and reliability of data transmission of the terminal device are effectively ensured, and a feature of satellite communication and a PUR mode in an IoT network are effectively combined, to effectively integrate the IoT network and satellite communication.

In a possible implementation, the first timer is any one in a timer set.

In a possible implementation, the timer set includes any one or more of the following: a timer corresponding to the ephemeris information configured by the network device, a timer corresponding to the common timing advance TA information configured by the network device, and a timer corresponding to a historical global navigation satellite system (global navigation satellite system, GNSS) reported by the terminal device.

In a possible implementation, before the starting a first timer, the method further includes: receiving the information about the first timer, where the information about the first timer includes duration information of the first timer.

In a possible implementation, the duration of the first timer is smallest duration of a timer corresponding to ephemeris information configured by the network device, a timer corresponding to common timing advance TA information configured by the network device, and a timer corresponding to a historical global navigation satellite system GNSS reported by the terminal device.

In a possible implementation, the timer corresponding to the ephemeris information configured by the network device and the timer corresponding to the common timing advance TA information configured by the network device are different timers, or are a same timer.

In a possible implementation, the timer corresponding to the ephemeris information configured by the network device, the timer corresponding to the common timing advance TA information configured by the network device, and the timer corresponding to the historical global navigation satellite system GNSS reported by the terminal device are a same timer.

In a possible implementation, the sending uplink data by using the PUR includes: sending the uplink data in idle mode by using the PUR.

In a possible implementation, the configuration information is included in any one of higher layer signaling, a message Msg2, a message Msg4, or a message MsgB.

In a possible implementation, the method further includes: when the second timer expires or the first timer expires, re-initiating a random access process if the configuration information is not received, or global navigation satellite system GNSS positioning is not completed, or updated ephemeris information and/or common timing advance TA information are/is not obtained.

In a possible implementation, the ephemeris information and the common TA information are included in a same system message, or the ephemeris information and the common TA information are included in different system messages, or the ephemeris information and the common TA information are included in dedicated control signaling of the terminal device.

It may be understood that the information about the first timer shown in this embodiment of this application may be included in a system message, or may be included in dedicated control signaling of the terminal device. For example, the information about the first timer includes the ephemeris information and/or the common TA information.

According to a second aspect, an embodiment of this application provides a satellite communication method, where the method includes:
sending information about a first timer; sending configuration information, where the configuration information carries information about a preconfigured uplink resource PUR, the information about the PUR carries duration of a second timer, and effective time of the second timer is within effective duration of the first timer; and receiving uplink data by using the PUR.

In a possible implementation, the information about the first timer includes duration information of the first timer.

In a possible implementation, the receiving uplink data by using the PUR includes: before the first timer expires and before the second timer expires, receiving the uplink data by using the PUR.

In a possible implementation, the first timer is any one in a timer set.

In a possible implementation, the timer set includes any one or more of the following:
a timer corresponding to ephemeris information configured by a network device, a timer corresponding to common timing advance TA information configured by the network device, and a timer corresponding to a historical global navigation satellite system GNSS reported by a terminal device.

In a possible implementation, the duration of the first timer is smallest duration of a timer corresponding to ephemeris information configured by the network device, a timer corresponding to common timing advance TA information configured by the network device, and a timer corresponding to a historical global navigation satellite system GNSS reported by the terminal device.

In a possible implementation, the timer corresponding to the ephemeris information configured by the network device and the timer corresponding to the common timing advance TA information configured by the network device are different timers, or are a same timer.

In a possible implementation, the timer corresponding to the ephemeris information configured by the network device, the timer corresponding to the common timing advance TA information configured by the network device, and the timer corresponding to the historical global navigation satellite system GNSS reported by the terminal device are a same timer.

In a possible implementation, the configuration information is included in any one of higher layer signaling, a message Msg2, a message Msg4, or a message MsgB.

In a possible implementation, the information about the first timer includes the ephemeris information and/or the common TA information.

For example, the information about the first timer may be included in a system message, or may be included in dedicated control signaling of the terminal device.

In a possible implementation, the ephemeris information and the common TA information are included in a same system message, or the ephemeris information and the common TA information are included in different system messages, or the ephemeris information and the common TA information are included in dedicated control signaling of the terminal device.

According to a third aspect, an embodiment of this application provides a communication apparatus, configured to implement the method in the first aspect or any possible implementation of the first aspect. The communication apparatus includes corresponding units configured to perform the method in any one of the first aspect or the possible implementations of the first aspect.

For example, the communication apparatus may be a terminal device, a chip in a terminal device, or the like.

According to a fourth aspect, an embodiment of this application provides a communication apparatus, configured to perform the method in any one of the second aspect or the possible implementations of the second aspect. The communication apparatus includes corresponding methods configured to perform the method in any one of the second aspect or the possible implementations of the second aspect.

For example, the communication apparatus may be a network device or a chip in a network device.

In the third aspect or the fourth aspect, the communication apparatus may include a transceiver unit and a processing unit. For specific descriptions of the transceiver unit and the processing unit, refer to the apparatus embodiments provided below.

According to a fifth aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver, and the transceiver is configured to receive a signal or send a signal. For example, the transceiver may be further configured to: receive information about a first timer and configuration information, send uplink data, and the like.

In this embodiment of this application, the communication apparatus may be a terminal device, a chip in a terminal device, or the like.

According to a sixth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver, and the transceiver is configured to receive a signal or send a signal. For example, the transceiver may be configured to: send information about a first timer and configuration information, receive uplink data, and the like.

In this embodiment of this application, the communication apparatus may be a network device, a chip in a network device, or the like.

According to a seventh aspect, an embodiment of this application provides a communication apparatus. The communication apparatus includes a logic circuit and an interface, the logic circuit is coupled to the interface, the logic circuit is configured to start a first timer, and the interface is configured to input configuration information and output uplink data.

For example, the interface is configured to input information about the first timer; and the logic circuit is configured to process the information about the first timer, for example, start the first timer.

It may be understood that for descriptions of the first timer, the configuration information, the second timer, a PUR, and the like, refer to the descriptions of the first aspect or the second aspect, or refer to the following embodiments. Details are not described herein again.

According to an eighth aspect, an embodiment of this application provides a communication apparatus. The communication apparatus includes a logic circuit and an interface, the logic circuit is coupled to the interface, the interface is configured to output information about a first timer and configuration information, and the interface is further configured to input uplink data.

For example, the logic circuit is configured to: determine the information about the first timer and the configuration information, and then output the information about the first timer and the configuration information through the interface. The logic circuit is further configured to control the interface to input the uplink data by using the PUR.

It may be understood that for descriptions of the first timer, the configuration information, the second timer, a PUR, and the like, refer to the descriptions of the first aspect or the second aspect, or refer to the following embodiments. Details are not described herein again.

According to a ninth aspect, an embodiment of this application provides a computer-readable storage medium. The computer-readable storage medium is configured to store a computer program, and when the computer program is run on a computer, the method in any one of the first aspect or the possible implementations of the first aspect is performed.

According to a tenth aspect, an embodiment of this application provides a computer-readable storage medium. The computer-readable storage medium is configured to store a computer program, and when the computer program is run on a computer, the method in any one of the second aspect or the possible implementations of the second aspect is performed.

According to an eleventh aspect, an embodiment of this application provides a computer program product. The computer program product includes a computer program or computer code, and when the computer program product runs on a computer, the method in any one of the first aspect or the possible implementations of the first aspect is performed.

According to a twelfth aspect, an embodiment of this application provides a computer program product. The computer program product includes a computer program or computer code, and when the computer program product runs on a computer, the method in any one of the second aspect or the possible implementations of the second aspect is performed.

According to a thirteenth aspect, an embodiment of this application provides a computer program. When the computer program is run on a computer, the method in any one of the first aspect or the possible implementations of the first aspect is performed.

According to a fourteenth aspect, an embodiment of this application provides a computer program. When the computer program is run on a computer, the method in any one of the second aspect or the possible implementations of the second aspect is performed.

According to a fifteenth aspect, an embodiment of this application provides a wireless communication system. The wireless communication system includes a terminal device and a network device. The terminal device is configured to perform the method in any one of the first aspect or the possible implementations of the first aspect. The network device is configured to perform the method in any one of the second aspect or the possible implementations of the second aspect.

### BRIEF DESCRIPTION OF DRAWINGS

FIG. 1 is a schematic diagram of an architecture of a non-terrestrial network (non-terrestrial network, NTN) communication system according to an embodiment of this application;
FIG. 2 is a schematic diagram of an architecture of another NTN communication system according to an embodiment of this application;
FIG. 3 is a schematic flowchart of four-step random access according to an embodiment of this application;
FIG. 4 is a schematic flowchart of a satellite communication method according to an embodiment of this application;
FIG. 5a is a schematic diagram of a scenario of a satellite communication method according to an embodiment of this application;
FIG. 5b is another schematic diagram of a scenario of a satellite communication method according to an embodiment of this application;
FIG. 6 is another schematic diagram of a scenario of a satellite communication method according to an embodiment of this application;
FIG. 7 is still another schematic diagram of a scenario of a satellite communication method according to an embodiment of this application;
FIG. 8 is still another schematic diagram of a scenario of a satellite communication method according to an embodiment of this application;
FIG. 9 is a schematic diagram of a structure of a communication apparatus according to an embodiment of this application;
FIG. 10 is a schematic diagram of a structure of another communication apparatus according to an embodiment of this application; and
FIG. 11 is a schematic diagram of a structure of still another communication apparatus according to an embodiment of this application.

### DESCRIPTION OF EMBODIMENTS

To make the objectives, technical solutions, and advantages of this application clearer, this application is further described with reference to the accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units is not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

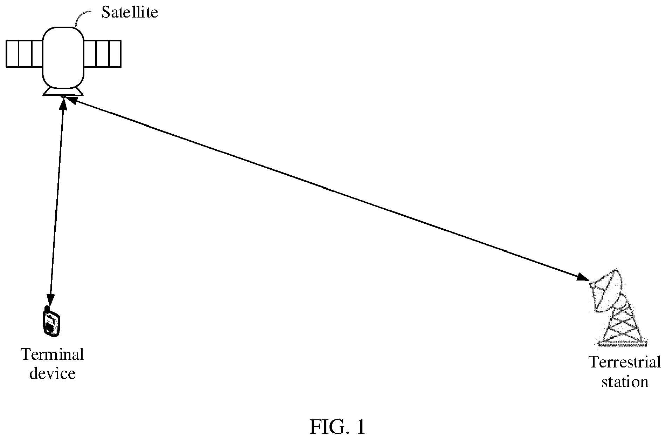

The method provided in this application may be applied to a non-terrestrial network (non-terrestrial network, NTN) communication system. As shown in FIG. 1, the communication system includes a terminal device, a satellite (which may also be referred to as a satellite base station), and a terrestrial station (which may also be referred to as a gateway or a gateway station) (gateway).

The terminal device in this application is an apparatus with a wireless transceiver function. The terminal device may communicate with an access network device (or may be referred to as an access device) in a radio access network (radio access network, RAN). The terminal device may also be referred to as user equipment (user equipment, UE), an access terminal, a terminal (terminal), a subscriber unit (subscriber unit), a subscriber station, a mobile station, a remote station, a remote terminal, a mobile device, a user terminal, a user agent, a user apparatus, or the like. In a possible implementation, the terminal device may be deployed on land, for example, deployed indoors or outdoors, deployed in a handheld form, or deployed in a car, or may be deployed on a water surface (for example, on a ship). In a possible implementation, the terminal device may be a handheld device, an in-vehicle device, a wearable device, a sensor, a terminal in an internet of things or an internet of vehicles, an uncrewed aerial vehicle, a terminal device in any form in a 5th generation (5th generation, 5G) network, a future network, or the like that has a wireless communication function. This is not limited in this application.

It may be understood that the terminal device shown in this application may further communicate with the terminal device through device-to-device (device-to-device, D2D) communication or machine-to-machine (machine-to-machine, M2M) communication.

It may be understood that the terminal device shown in this application may alternatively be a device or the like in the internet of things (internet of things, IoT). The IoT network may include, for example, the internet of vehicles. Communication manners in an internet of vehicles system are collectively referred to as a vehicle to X device (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian (vehicle to pedestrian, V2P) communication, vehicle to network (vehicle to network, V2N) communication, or the like.

The satellite in this application may provide a radio access service for the terminal device, schedule a radio resource to an accessed terminal device, and provide a reliable radio transmission protocol, a data encryption protocol, and the like. The satellite may be an artificial earth satellite, a high-altitude vehicle, or the like serving as a base station for wireless communication, for example, an evolved NodeB (evolutional NodeB, eNB) and a next generation NodeB (next generation NodeB, gNB). Alternatively, the satellite may be used as a relay of these base stations to transparently transmit radio signals of these base stations to the terminal device. In this case, the terrestrial station may be considered as a wireless communication base station. Therefore, in embodiments of this application, in some embodiments, for example, in a satellite regenerative scenario, a network device may be the satellite base station shown in FIG. 1. In other embodiments, for example, in a satellite transparent scenario, a network device may be the terrestrial station shown in FIG. 1. It may be understood that, in systems of different radio access technologies, names of devices having a network device function may be different, and are not shown in this application.

Optionally, the satellite may be a geostationary earth orbit (geostationary earth orbit, GEO) satellite, a non-geostationary earth orbit (non-geostationary earth orbit, NGEO) like a medium earth orbit (medium earth orbit, MEO) satellite or a low earth orbit (low earth orbit, LEO) satellite, a high altitude platform station (High Altitude Platform Station, HAPS), or the like. A specific type of a satellite is not limited in this application.

The terrestrial station in this application may be configured to connect a satellite to a core network. For example, when the satellite serves as a wireless communication base station, the terrestrial station may transparently transmit signaling between the satellite and the core network. Alternatively, the terrestrial station may be used as a wireless communication base station, and the satellite may transparently transmit signaling between the terminal device and the terrestrial station. For example, during communication, the terrestrial station may send signaling from the core network to the satellite through a feedback link (or referred to as a feeder link) (feeder link). The satellite sends the signaling to the terminal device through a service link (service link) between the satellite and the terminal device. Correspondingly, the terminal device may alternatively send signaling to the satellite through the service link, and the satellite sends the signaling to the core network through the terrestrial station.

It may be understood that FIG. 1 shows only one satellite and one terrestrial station. In practice, an architecture with a plurality of satellites and/or a plurality of terrestrial stations may be used as required. Each satellite may serve one or more terminal devices, each satellite may correspond to one or more terrestrial stations, each terrestrial station may correspond to one or more satellites, and the like. This is not specifically limited in this application.

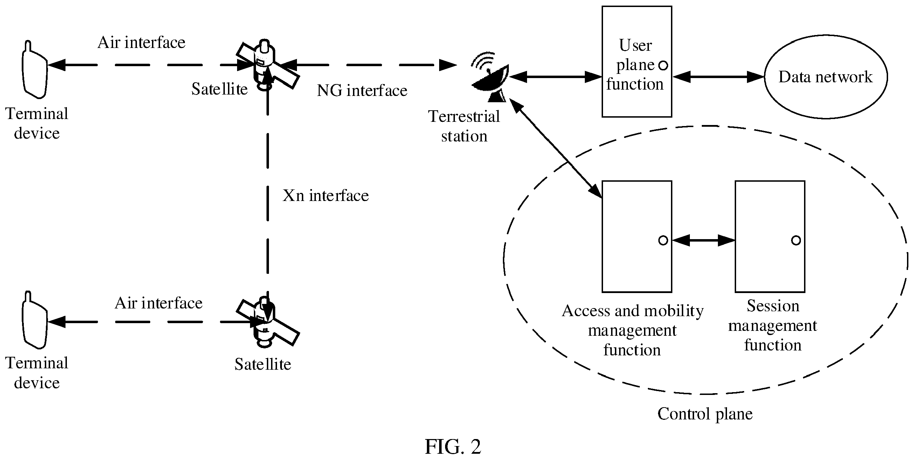

For example, FIG. 2 is a schematic diagram of an architecture of another NTN communication system according to an embodiment of this application. For example, a terminal device may access a network through an air interface (the air interface may be various types of air interfaces, for example, a 5G air interface), and a base station may be deployed on a satellite (for example, in a regenerative mode of a satellite), and is connected to a core network on the ground through a radio link. In addition, a radio link exists between satellites, to perform signaling interaction and user data transmission between base stations. Certainly, the base station may alternatively be deployed on the ground, and is connected to the core network by using an optical fiber. In this case, the satellite serves as a transparent forwarding node (for example, a transparent transmission mode of the satellite), and is responsible for transparent data forwarding.

For example, network elements in FIG. 2 and their interfaces may be shown as follows.

The terminal device may access a satellite network through an air interface and initiate a service like a call or Internet access. The base station may be configured to provide a radio access service, schedule a radio resource to an accessed terminal device, and provide a reliable radio transmission protocol, a data encryption protocol, and the like. A terrestrial station may be configured to be responsible for forwarding signaling and service data between a satellite base station and the core network. The core network may be used for user access control, mobility management, session management, user security authentication, charging, or the like. The core network may include a plurality of functional units, for example, including a control plane functional entity and a data plane functional entity. For example, as shown in FIG. 2, the core network may include an access and mobility management function (access and mobility management function, AMF), a session management function (session management function, SMF), a user plane function (user plane function, UPF), and the like. For example, the AMF may be configured to be responsible for user access management, security authentication, mobility management, and the like. The UPF may be configured to be responsible for managing user plane data transmission, traffic statistics, and the like.

For example, the air interface shown in FIG. 2 may be understood as a radio link between a terminal and a base station. An Xn interface may be understood as an interface between base stations, and is mainly used for signaling exchange such as handover. An NG interface may be used as an interface between a base station and a core network, and is used for exchanging signaling such as non-access (non-access stratum, NAS) signaling of the core network and service data of a user.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

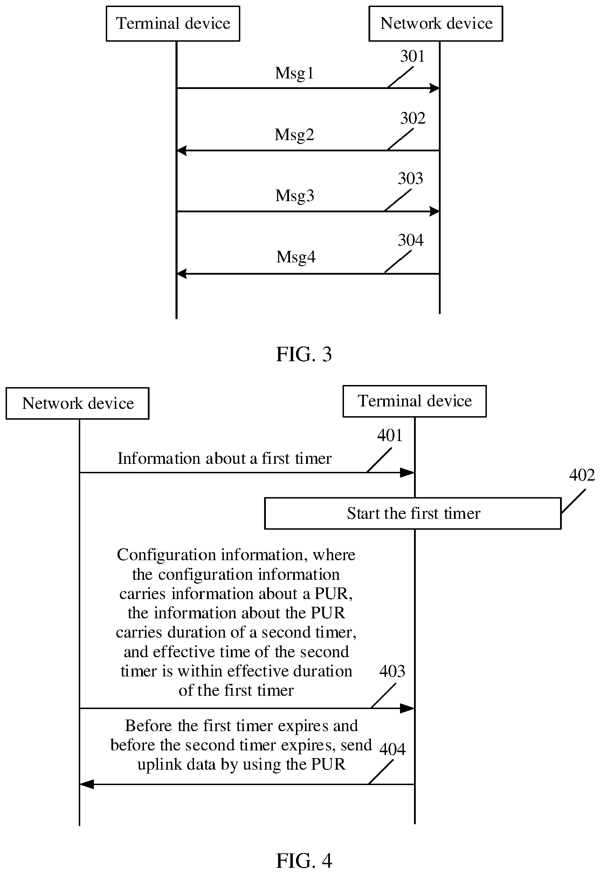

The following describes in detail a four-step random access method in embodiments of this application. As shown in FIG. 3:
301: A terminal device sends a random access preamble (random access preamble) to a network device, where the random access preamble may also be referred to as a Msgl (the Msg1 is used as an example in FIG. 3). Correspondingly, the network device receives the Msg1.

For example, a function of the random access preamble is to notify the network device that there is a random access request, so that the network device can estimate a transmission delay between the network device and the terminal device, so that the network device calibrates uplink timing (uplink timing) and notifies the terminal device of calibration information by using a timing advance (timing advance, TA) command (timing advance command).

302: The network device sends a random access response (random access response, RAR) to the terminal device, where the random access response may also be referred to as a Msg2. Correspondingly, the terminal device receives the Msg2.

For example, the random access response may include a sequence number of the random access preamble, the timing advance command (timing advance command, TAC), uplink resource allocation information, and the like.

303: The terminal device sends an uplink message to the network device, where the uplink message may also be referred to as a Msg3. Correspondingly, the network device receives the Msg3.

For example, if a random access preamble indicated by the sequence number of the random access preamble in the random access response received by the terminal device is the same as the random access preamble sent by the terminal device to the network device, the terminal device considers that the random access response is a random access response for the terminal device. After receiving the random access response, the terminal device sends the uplink message on an uplink resource indicated by the random access response, for example, sends uplink data on a physical uplink shared channel (physical uplink shared channel, PUSCH). For example, the Msg3 may carry a unique subscriber identifier.

304: The network device returns a contention resolution message to the terminal device, where the contention resolution message is also referred to as a Msg4.

For example, the network device carries the unique subscriber identifier in the Msg3 in the contention resolution message to indicate a terminal device that successfully accesses a network, and another terminal device that fails to access a network initiates random access again.

For example, to reduce power consumption of the terminal device and a communication delay, an IoT network also allows the terminal device to carry the uplink data in the Msg3. For example, a data amount of the uplink data is limited. Therefore, after receiving the Msg4, the terminal device may continue to keep in idle mode. That is, it indicates that the terminal device completes data sending via the Msg3, and does not need to enter connected mode. If more uplink data needs to be sent, the terminal device needs to enter connected mode to continue to send data.

The foregoing carrying the uplink data via the Msg3 may also be referred to as early data transmission (early data transmission, EDT). It may be understood that after completing sending the uplink data via the Msg3, the terminal device may keep in idle mode after receiving the Msg4.

Generally, to reduce power consumption of the terminal device and a communication delay, in the IoT network, the terminal device may be supported in directly sending the uplink data in the idle (idle) mode, and an uplink resource used for sending the uplink data may be preconfigured by the network device. For example, when entering idle mode, the terminal device may determine whether timing advance (timing advance, TA) is effective. If the timing advance is effective, the terminal device may send data by using a preconfigured uplink resource (preconfigured uplink resource, PUR). For example, when the TA is ineffective, whether to end a PUR mode is determined based on radio resource control (radio resource control, RRC) signaling delivered by the network device.

It may be understood that the PUR shown in this application may also be referred to as the preconfigured uplink resource or the like. The PUR may be used to indicate that a resource of the PUR is a resource that is preconfigured by the network device for the terminal device and that is used to send the uplink data. Therefore, a resource or a resource name having a similar function falls within the protection scope of this application.

The foregoing method is shown by using terrestrial communication as an example. For satellite communication, because TA in the satellite communication is different from TA in the terrestrial communication (for example, an amount of timing advance adjustment performed on an uplink signal in the satellite communication is greater than an amount of timing advance adjustment performed on an uplink signal in the terrestrial communication), the foregoing PUR mode is more applicable to the terrestrial communication. However, embodiments of this application provide a satellite communication method and apparatus, so that the PUR mode can be combined with the satellite communication, so that the PUR can be better applicable to the satellite communication.

In the satellite communication, to align timing of an uplink signal with timing of a downlink signal when the uplink signal arrives at a base station, the terminal device needs to perform timing advance adjustment when sending the uplink signal. The timing advance is related to a round-trip transmission delay from the terminal device to the base station.

For example, if a satellite is in a transparent transmission mode, the round-trip transmission delay from the terminal device to the base station includes a round-trip transmission delay from the terminal device to the satellite and a round-trip transmission delay from the satellite to a terrestrial station. In this case, the terminal device needs to determine the round-trip transmission delay from the terminal device to the satellite based on broadcast ephemeris information, and the round-trip transmission delay from the satellite to the terrestrial station may be notified to the terminal device by using broadcast common timing advance information. For example, the ephemeris information may include location information of the terminal device and location information of the satellite.

For example, if a satellite is in a regenerative mode, the round-trip transmission delay from the terminal device to the base station includes the round-trip transmission delay from the terminal device to the satellite. In this case, the terminal device needs to determine the round-trip transmission delay from the terminal device to the satellite based on the broadcast ephemeris information.

The round-trip transmission delay from the satellite to the terrestrial station is shared by all terminal devices in a satellite coverage area. In addition, the satellite moves at a high speed. Therefore, the common timing advance information and the ephemeris information need to be updated continuously. Therefore, the terminal device needs to continuously monitor a broadcast message, to obtain the common timing advance information and the ephemeris information in time.

However, in the IoT network, to reduce power consumption of the terminal device, a system message (including the broadcast message) is not listened to when the terminal device is in connected mode. Therefore, when a device (for example, an IoT device for short, or may also be referred to as the terminal device) in the IoT network communicates with a satellite, if the terminal device is in connected mode for a long time, uplink out-of-synchronization is caused because the terminal device cannot listen to the broadcast message, and an uplink failure is caused.

In view of this, embodiments of this application provide a satellite communication method and apparatus, to effectively improve the foregoing case, and better integrate an IoT network and satellite communication. For example, the method provided in embodiments of this application can better combine the satellite communication with the PUR mode, the EDT method, or the like in the IoT network. For example, the terminal device may obtain system messages related to the satellite communication, such as the ephemeris information and the common TA information in time, to ensure reliability and continuity of data transmission of the terminal device.

It may be understood that the satellite communication shown in embodiments of this application may provide communication services for some areas, such as sea or forests, that cannot be covered by a terrestrial communication network. In this way, reliability of 5G communication or future communication can be enhanced. For example, it is ensured that users on an airplane, a train, and the traffic can obtain better communication services. For another example, more data transmission resources can be provided for 5G communication, and a network rate can be improved. In addition, due to characteristics of the IoT, the IoT can be better supported by the satellite communication.

It may be understood that, for terms such as a terminal device, a network device, and four-step random access in the satellite communication method shown below, refer to the foregoing description.

FIG. 4 is a schematic flowchart of a satellite communication method according to an embodiment of this application. As shown in FIG. 4, the method includes the following steps.

401: A network device sends information about a first timer. Correspondingly, a terminal device receives the information about the first timer.

In this embodiment of this application, the information about the first timer may be understood as information related to the first timer. In an example, the information about the first timer may be included in a system message, for example, delivered by using a broadcast message. In another example, the information about the first timer may be included in a unicast message, for example, UE-specific (UE-specific) control signaling.

The first timer may be any one in a timer set. For example, the timer set includes any one or more of the following: a timer corresponding to ephemeris information configured by the network device, a timer corresponding to common TA information configured by the network device, and a timer corresponding to a historical GNSS reported by the terminal device.

In an example, the information about the first timer may include duration information of the first timer. The first timer may be determined by any one or more of the timer corresponding to the ephemeris information, the timer corresponding to the common TA information, or the timer corresponding to the historical GNSS. In other words, duration of the first timer may be determined based on any one or more of effective duration corresponding to the ephemeris information, effective duration corresponding to the common TA information, or effective duration corresponding to the historical GNSS. For example, the network device may determine the duration of the first timer based on a smallest value of the effective duration corresponding to the ephemeris information or the effective duration corresponding to the common TA information. Alternatively, the network device may determine the duration of the first timer based on a smallest value of the effective duration corresponding to the ephemeris information, the effective duration corresponding to the common TA information, and the effective duration corresponding to the GNSS. For example, the timer corresponding to the historical GNSS may be estimated by the network device based on the historical GNSS, may be determined by the network device based on the effective duration of the historical GNSS reported by the terminal device, or the like. How the network device learns of the timer corresponding to the historical GNSS is not limited in embodiments of this application.

In another example, the information about the first timer may include the ephemeris information and the duration information of the first timer. For example, the network device delivers the duration information of the first timer while delivering the ephemeris information.

In still another example, the information about the first timer may include the common TA information and the duration information of the first timer. For example, the network device delivers the duration information of the first timer while delivering the common TA.

The timer corresponding to the ephemeris information and the timer corresponding to the common TA information in this embodiment of this application may be different timers or a same timer. In an example, the ephemeris information and the common TA information may be included in (or may be understood as being carried in) a same system message. For example, the ephemeris information and the common TA information share a timer (for example, the first timer). For another example, even if in a same system message, the ephemeris information and the common TA information may not share a timer. For example, the system message that may be sent by the network device includes the ephemeris information, the common TA information, and the duration information of the first timer. In another example, the ephemeris information and the common TA information may be included in different system messages. For example, the ephemeris information and the common TA information separately correspond to different timers. For another example, in different system messages, the ephemeris information corresponds to the timer, and the effective duration of the common TA information may be read based on agreed effective duration or based on a change of a corresponding system message. For example, the network device may configure information about a PUR based on the timer corresponding to the ephemeris information and the agreed effective duration of the common TA information. In still another example, the ephemeris information and the common TA information are separately included in the system message and UE-specific control signaling. For example, the ephemeris information is included in the system message, and the common TA information is included in the UE-specific control signaling; or the ephemeris information is included in the UE-specific control signaling, and the common TA information is included in the system message.

It may be understood that the information about the first timer sent by the network device may further directly include effective duration of each timer, then the terminal device selects a timer as the first timer, and the like. For this implementation, refer to the foregoing descriptions. Details are not described herein again.

402: The terminal device starts the first timer.

The terminal device may start the first timer based on effective time of the first timer. The effective time of the first timer may be defined by a standard or a protocol, or may be negotiated by the network device and the terminal device, or may be set by the network device. This is not limited in embodiments of this application. It may be understood that the effective time of the first timer may be understood as time at which the first timer starts to time, or time at which the first timer is started, or time at which the first timer starts to run, or the like. Effective duration of the first timer shown below may be understood as that the first timer does not expire, or the first timer does not expire, or timing of the first timer does not end, or the first timer is still running. It may be understood that, in this embodiment of this application, effective duration of the first timer maintained by the terminal device may be different from effective duration of the first timer maintained by the network device. It may be understood that descriptions of the effective time and the effective duration of the first timer are also applicable to the second timer shown below. Details are not described below again.

For example, the effective time of the first timer may be implemented in the following manners.

### Implementation 1:

Time at which the terminal device receives the information about the first timer is the effective time of the first timer. The effective duration of the first timer in the terminal device is equal to the duration of the first timer.

For example, when receiving the information about the first timer, the terminal device starts the first timer. In the following table, for example, the network device may start the first timer based on a transmission delay between the terminal device and the network device. For example, the transmission delay may include a transmission delay between a terrestrial station and a satellite, and a round-trip delay between the satellite and the terminal device (for example, a transparent transmission mode of the satellite). For another example, the transmission delay may include a transmission delay between the terminal device and the satellite (for example, a regenerative mode of the satellite). It may be understood that there may be some deviations between time at which the network device and the time at which the terminal device starts the first timer. However, the deviations fall within a normal range. Therefore, the deviations should not be understood as a limitation on embodiments of this application. It may be understood that the descriptions of the deviations are also applicable to the following.

### Implementation 2:

A period of time after the terminal device receives the information about the first timer is the effective time of the first timer. The effective duration of the first timer in the terminal device is equal to the duration of the first timer.

For example, if the terminal device receives the information about the first timer at 10:00, and the duration is 5 ms, the effective time of the first timer is 10.5 ms. For example, the duration may be defined by a standard or a protocol, or may be set by the network device, or may be negotiated by the terminal device and the network device, or the like. For example, the duration may alternatively be determined by the network device based on a maximum transmission delay between the terminal device and the network device. The duration is not limited in embodiments of this application. The maximum transmission delay may be, for example, a transmission delay of a point that is farthest from the network device and that is in a beam or a cell area covered by the network device. In this case, for example, the network device may start the first timer based on a transmission delay between the terminal device and the network device and the duration.

### Implementation 3:

Time at which the network device sends the information about the first timer is the effective time of the first timer.

For example, if the time at which the network device sends the information about the first timer is T₁, T₁ is the effective time of the first timer. In this case, after the terminal device receives the information about the first timer, effective duration of the first timer maintained by the terminal device is reduced.

For example, the duration of the first timer is D₁. If T₁ is used as the effective time of the first timer, because of a transmission delay (for example, delayi) between the network device and the terminal device, it indicates that the effective duration of the first timer maintained by the terminal device is reduced. For example, the effective duration of the first timer in the terminal device is Di-delayi. It may be understood that the information about the first timer may carry the time at which the network device sends the information about the first timer. Alternatively, the information about the first timer may not carry the time at which the network device sends the information about the first timer, but the terminal device estimates, based on the transmission delay between the terminal device and the network device, the time at which the network device sends the information about the first timer.

For another example, the effective duration of the first timer may be determined based on a maximum transmission delay delayₘₐₓ between the terminal device and the network device, or the effective duration of the first timer may be determined based on a minimum transmission delay delayₘᵢₙ between the terminal device and the network device. In other words, the terminal device may compensate for the effective duration of the first timer based on the transmission delay between the terminal device and the network device. For example, the effective time of the first timer is determined based on the maximum transmission delay delayₘₐₓ, and the transmission delay delayi between the terminal device and the network device is less than the delayₘₐₓ. In this case, it indicates that the effective duration of the first timer may be delayₘₐₓ - delay₁ + D₁. For another example, the effective time of the first timer is determined based on the minimum transmission delay delayₘᵢₙ, and the transmission delay delayi between the terminal device and the network device is greater than the delayₘᵢₙ. In this case, it indicates that the effective duration of the first timer may be D₁ - (delay₁ - delayₘᵢₙ). Because the maximum transmission delay or the minimum transmission delay between the terminal device and the network device is the same for a terminal device in a coverage area of the network device, both the terminal device and the network device may determine, based on the maximum transmission delay or the minimum transmission delay, the effective duration of the first timer maintained by the terminal device and the network device.

### Implementation 4:

Time at which the satellite receives the information about the first timer is the effective time of the first timer. The effective duration of the first timer in the terminal device is less than the duration of the first timer.

For example, the satellite may be in a transparent transmission mode. When the satellite is in the transparent transmission mode, it indicates that a device (namely, the network device) having a base station function is the terrestrial station. In a coverage area of the network device, transmission delays between the network device and satellites are the same. Therefore, the time at which the satellite receives the information about the first timer is set to the effective time of the first timer, and this may be applicable to all terminal devices in the coverage area of the network device.

It may be understood that, for the implementation 4, the information about the first timer may carry the time at which the network device sends the information about the first timer. Alternatively, when the network device sends the information about the first timer, sending time of the information about the first timer may not be carried. When forwarding the information about the first timer, the satellite may carry the time at which the satellite receives the information about the first timer. In this case, there may be some deviations between time at which the network device and time at which the terminal device starts the first timer. However, the deviations fall within a normal range.

It may be understood that, for the implementation 4, the information about the first timer may not carry time at which the terrestrial station sends the information about the first timer, or the time at which the satellite receives the information about the first timer. For example, the terminal device estimates, based on the transmission delay between the terminal device and the satellite and the duration of the first timer, effective duration of the first timer maintained by the terminal device.

For example, the network device may estimate, based on the transmission delay between the network device and the satellite, effective time of the first timer maintained by the network device. The effective duration of the first timer in the network device is equal to the duration of the first timer.

It may be understood that, before the first timer expires, the second timer takes effect. In this case, if the first timer is reconfigured, the effective duration of the first timer is prolonged. For example, even if the time at which the network device sends the information about the first timer is the effective time of the first timer, the effective duration of the first timer may still be greater than D₁. Certainly, a second timer may alternatively be reconfigured.

403: The network device sends configuration information, where the configuration information carries information about a PUR, the information about the PUR carries duration of the second timer, and effective time of the second timer is within the effective duration of the first timer. Correspondingly, the terminal device receives the configuration information.

In this embodiment of this application, the second timer may indicate whether the PUR is effective. For example, when the second timer is in a running state, it may indicate that the PUR is valid. If the second timer expires or expires, it indicates that the PUR is ineffective. The effective time of the second timer may be within the effective duration of the first timer maintained by the network device, or the effective time of the second timer may be within the effective duration of the first timer maintained by the terminal device. For descriptions of the effective duration of the first timer, refer to step 402. Details are not described herein again.

In a possible implementation, the network device may send the configuration information to the terminal device within the effective duration of the first timer. For example, before the first timer expires, the network device may send the configuration information to the terminal device. In addition, the effective time of the second timer is within the effective duration of the first timer. For example, when the first timer is about to expire (that is, before the first timer expires or before the first timer expires), the terminal device still needs to transmit uplink data (in addition, duration of uplink transmission is long). In this case, the terminal device expects the network device to send the configuration information, to configure the PUR for the terminal device, to ensure that the terminal device in idle mode can still send the uplink data by using the PUR. That is, the terminal device needs to receive the configuration information before the first timer expires, and start the second timer.

In another possible implementation, the network device may send the configuration information to the terminal device before the network device does not send the information about the first timer. In this case, although the network device sends the configuration information, the second timer carried in the configuration information may not take effect. For example, the second timer may take effect within the effective duration of the first timer after the terminal device runs the first timer. In other words, the terminal device may receive the configuration information before receiving the information about the first timer, and start the second timer when the terminal device starts the first timer (for example, when the first timer is started, or after the first timer is started and before the first timer expires).

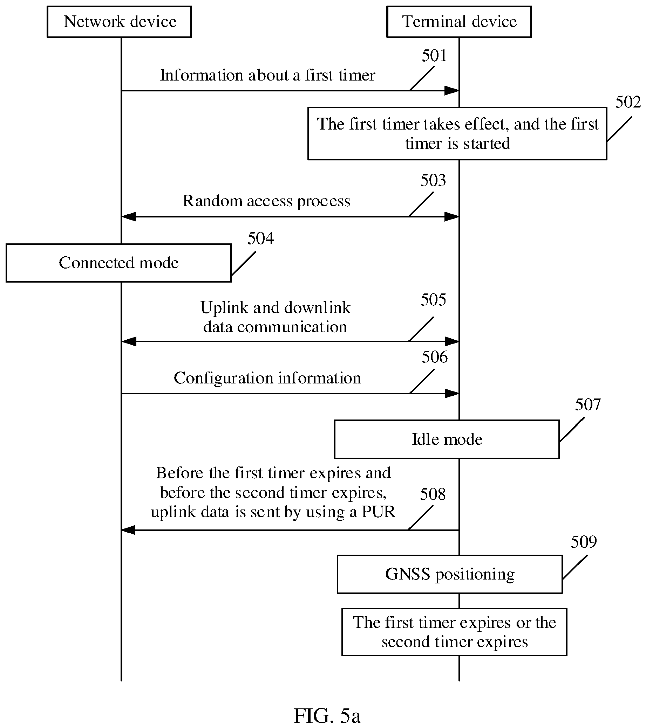

It may be understood that the configuration information shown in this embodiment of this application may be included in any one of higher layer signaling, a Msg2, a Msg4, or a MsgB. For specific descriptions of the configuration information, refer to the following methods shown in FIG. 5a to FIG. 8.

404: Before the first timer expires and before the second timer expires, the terminal device sends the uplink data by using the PUR. Correspondingly, the network device receives the uplink data.

For example, before the first timer in the terminal device expires and before the second timer expires, the terminal device sends the uplink data by using the PUR. Alternatively, within the effective duration of the first timer and the effective duration of the second timer, the uplink data is sent by using the PUR. For example, the terminal device may send the uplink data in idle mode by using the PUR. For example, the terminal device may automatically enter idle mode when receiving the configuration information or starting the second timer. For another example, the terminal device may automatically enter idle mode after completing a random access process. Time at which the terminal device enters idle mode is not limited in embodiments of this application.

In a possible implementation, the network device may receive the uplink data by using the PUR before the first timer expires and before the second timer expires.

In a possible implementation, when the second timer expires or the first timer expires, the terminal device re-initiates a random access process if the terminal device does not receive the configuration information, or does not complete GNSS positioning, or does not obtain updated ephemeris information and/or common TA information.

For example, before the first timer expires, if the terminal device does not receive the configuration information sent by the network device, or the PUR is not configured for the terminal device, or the terminal device does not parse the configuration information sent by the network device, when the first timer expires (for example, when the first timer expires or after the first timer expires), the terminal device needs to trigger a radio link failure, for example, may re-initiate a random access process. For example, if the terminal device still does not obtain the updated ephemeris information and/or the common TA information when the first timer or the second timer expires, it indicates that after timing advance currently used by the terminal device is ineffective, the terminal device cannot obtain updated timing advance in time. Consequently, uplink and downlink data may not be aligned, and uplink out-of-synchronization is caused, and an uplink failure is caused. For example, if the terminal device still does not complete GNSS positioning when the first timer expires or the second timer expires, it indicates that the terminal device cannot report effective duration of the GNSS in time. Consequently, the network device may fail to budget the duration of the first timer (for example, when the first timer is a timer corresponding to the GNSS). Certainly, that the first timer expires or the second timer expires includes that the first timer expires and the second timer expires.

For example, the foregoing implementation may be further understood as follows: Before the first timer expires or the second timer expires, the terminal device needs to complete GNSS positioning and obtain any one or more of the updated ephemeris information and the common TA information. Alternatively, before the first timer expires and before the second timer expires, the terminal device needs to complete GNSS positioning and obtain any one or more of the updated ephemeris information and the common TA information.

It may be understood that the terminal device may complete GNSS positioning and obtain the updated ephemeris information or the common TA information in connected mode or idle mode. For example, the terminal device may perform GNSS positioning in connected mode, and listen to an NTN-related system message. For example, the IoT device may be in a half-duplex mode. Therefore, when listening to the NTN-related system message or performing GNSS positioning or the like in connected mode, the IoT device does not conflict with data transmission.

In this embodiment of this application, the first timer is set, and this effectively improves a case in which a terminal device always needs to listen to information about the first timer (for example, including ephemeris information or common TA information). For example, the terminal device may not always need to listen to the information about the first timer within the effective duration of the first timer, and this effectively reduces power consumption. In addition, it is ensured that the terminal device can listen to the information about the first timer in connected mode (for example, listen to the information when the first timer or the second timer is about to expire). Therefore, the terminal device can further effectively update the duration of the first timer in time. The second timer is set, so that the terminal device may send the uplink data within effective duration of the second timer, and this effectively ensures validity of the PUR. Uplink and downlink resources (namely, the PUR) are configured in idle mode, to ensure that when a terminal has a large amount of data or a large quantity of repetition times of transmission, uplink out-of-synchronization is not caused by expiration of a system message. Therefore, in this embodiment of this application, before the first timer expires and before the second timer expires, the terminal device sends the uplink data by using the PUR, so that validity of the PUR can be ensured, and validity of the TA can be ensured. Therefore, effectiveness and reliability of data transmission of the terminal device are effectively ensured, and a feature of satellite communication and a PUR mode in an IoT network are effectively combined, to effectively integrate the IoT network and satellite communication.

The following describes, with reference to a specific scenario, a satellite communication method provided in an embodiment of this application. For ease of description, in the following, the effective time of the first timer is the time at which the terminal device receives the information about the first timer, or duration after the time at which the terminal device receives the information about the first timer.

FIG. 5a is a schematic diagram of a scenario of a satellite communication method according to an embodiment of this application. As shown in FIG. 5a, the method includes the following steps.

501: A network device sends information about a first timer to a terminal device. Correspondingly, the terminal device receives the information about the first timer.

It may be understood that, for the information about the first timer, refer to the foregoing description. Details are not described herein again. It may be understood that duration of the first timer shown in step 501 may be determined based on ephemeris information and/or common TA information.

502: The first timer takes effect, and the terminal device starts the first timer.

For example, the terminal device starts the first timer, and effective duration of the first timer is equal to the duration D₁ of the first timer.

It may be understood that, if effective time of the first timer is earlier than receiving time of the information about the first timer, the terminal device may start the first timer after receiving the information about the first timer, but the effective duration of the first timer is less than the duration D₁ of the first timer.

503: The terminal device initiates a random access process.

It may be understood that the terminal device may initiate a four-step random access process, as shown in FIG. 3. Alternatively, the terminal device may initiate a two-step random access process or the like. This is not limited in embodiments of this application.

For example, the two-step random access process may include: The terminal device sends both a random access preamble and data to the network device in a MsgA. After receiving the MsgA, the network device sends a MsgB (which may also be referred to as a random access response) to the terminal device. For example, the MsgA includes a MsgA preamble part and a MsgA data part, the preamble is carried on a physical random access channel (physical random access channel, PRACH), and the data part is carried on a PUSCH. It may be understood that the two-step random access process shown herein is merely an example. With evolution of a standard or a technology, the four-step random access process or the two-step random access process may change. This is not limited in embodiments of this application.

It may be understood that a sequence of step 501 to step 503 is not limited in embodiments of this application. Step 501 to step 503 shown in FIG. 5a do not represent a sequence of the steps.

504: The terminal device enters connected mode.

For example, the terminal device may send an RRC connection request (RRC connection request) message to the network device. After receiving the RRC connection request message, the network device may send an RRC connection setup (RRC connection setup) message to the terminal device. Then, after receiving the RRC connection setup message, the terminal device may send an RRC connection setup complete (RRC connection setup complete) message to the network device. It may be understood that the RRC connection setup procedure shown herein is merely an example. A specific procedure in which the terminal device enters connected mode is not limited in embodiments of this application.

505: Uplink and downlink data communication is performed between the terminal device and the network device.

506: Within the effective duration of the first timer, the terminal device receives configuration information sent by the network device.

For example, when the first timer is about to expire and before uplink data sent by the terminal device is not completed (for example, a large quantity of repetitions may cause long uplink transmission duration), the terminal device expects the network device to configure a PUR by using higher layer signaling such as PUR resource configuration signaling (which may also be referred to as PUR-Config-NB) of narrowband internet of things (narrowband internet of things, NB-IoT). A related second timer (which may also be referred to as a PUR Time Alignment Timer) may be configured for the PUR-Config-NB.

If no PUR is configured for the terminal device, or the terminal device does not receive the configuration information, or the terminal device does not decode the configuration information, or the terminal device does not decode the PUR configured by the network device, and the first timer expires, the terminal device needs to trigger a radio link failure, for example, re-initiate a random access process. It may be understood that the terminal device further needs to re-obtain a system message.

507: The terminal device enters idle mode.

If the terminal device correctly receives the configuration information within the effective duration of the first timer, the terminal device may automatically enter idle mode after receiving the configuration information. It may be understood that, that the terminal device automatically enters idle mode based on the configuration information is merely an example. For example, the terminal device may alternatively enter idle mode by using another trigger condition. This is not limited in embodiments of this application.

508: Before the first timer expires and before the second timer expires, the uplink data is sent by using the PUR.

For example, after entering idle mode, the terminal device may read a synchronization-related system message (namely, the information about the first timer shown above), and continue to send uncompleted uplink data on a corresponding PUR. It may be understood that the network device may alternatively send downlink data by using the PUR. This is not limited in embodiments of this application.

509: Before the first timer expires or the second timer expires, the terminal device performs GNSS positioning.

For example, the terminal device may determine effective duration of the GNSS based on a moving rate of the terminal device, to report the effective duration of the GNSS to the network device.

It may be understood that step 509 is described by using an example in which the terminal device performs GNSS positioning. The terminal device may further obtain updated information about the first timer before the first timer expires or before the second timer expires. In other words, before the first timer expires or the second timer expires, the terminal device needs to complete GNSS positioning (or report the effective duration of the GNSS), obtain any one or more of updated ephemeris information, obtain updated common TA information, or update duration of the first timer. A reason why the terminal device reports the effective duration of the GNSS is that the network device can better estimate expiration time of GNSS information of the terminal device by reporting the effective duration of the GNSS. Therefore, beneficial information may be provided for the network device to subsequently update the information about the first timer. A reason for obtaining the updated ephemeris information, common TA information, and the duration of the first timer is that the terminal device can continue to send the uplink data in idle mode by obtaining the information in time.

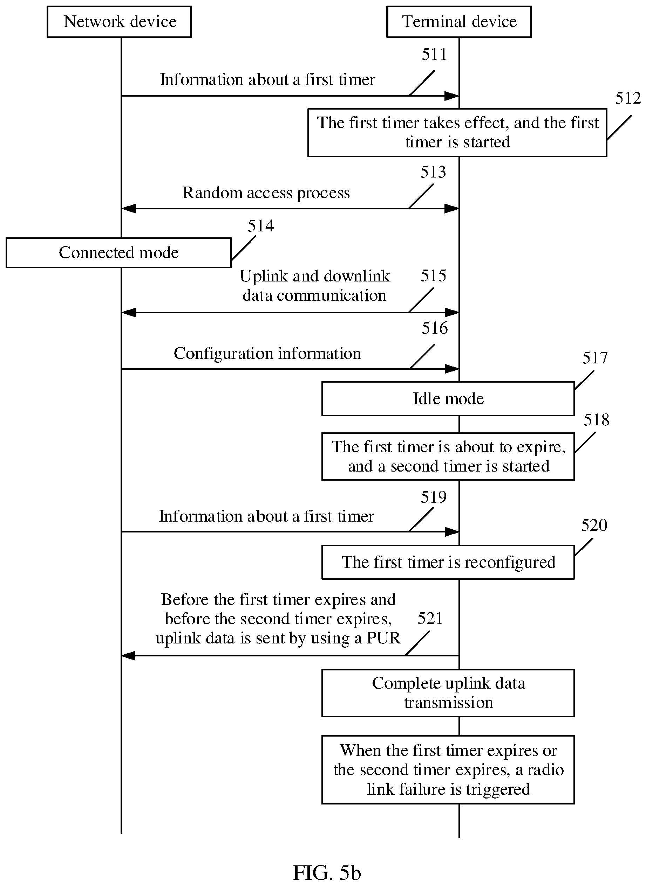

FIG. 5b is another schematic diagram of a scenario of a satellite communication method according to an embodiment of this application. As shown in FIG. 5b, the method includes the following steps.

511: A network device sends information about a first timer to a terminal device. Correspondingly, the terminal device receives the information about the first timer.

512: The first timer takes effect, and the terminal device starts the first timer.

513: The terminal device initiates a random access process.

514: The terminal device enters connected mode.

515: Uplink and downlink data communication is performed between the terminal device and the network device.

516: Within the effective duration of the first timer, the terminal device receives configuration information sent by the network device.

517: The terminal device enters idle mode.

It may be understood that for specific descriptions of step 511 to step 517, refer to FIG. 5a. Details are not described herein again.

518: The first timer is about to expire, and the second timer is started.

519: The network device sends the information about the first timer to the terminal device. Correspondingly, the terminal device receives the information about the first timer.

For example, the terminal device may report effective duration of a GNSS. In this case, the network device may reconfigure a timer corresponding to the GNSS for the terminal device. Alternatively, the network device may reconfigure ephemeris information and/or common TA information, and the like. In other words, before the first timer expires, the network device may alternatively resend the information about the first timer to the terminal device.

520: The first timer is reconfigured.

In other words, because the first timer does not expire, and the terminal device receives the information about the first timer, it indicates that the effective duration of the first timer is prolonged.

521: Before the first timer expires and before the second timer expires, uplink data is sent by using a PUR.

It may be understood that, when the terminal device does not obtain the information about the first timer or the like before the first timer expires or the second timer expires, the terminal device needs to trigger a radio link failure, or the network device may trigger a radio link failure.

According to the method provided in this embodiment of this application, it can be effectively ensured that the terminal device can enter idle mode when uplink data transmission is not completed, and continue to send, in idle mode, the uplink data that is not completely sent. In addition, the terminal device can further implement GNSS positioning in idle mode, and obtain ephemeris and common TA information. This effectively combines a feature of high mobility of satellite communication and a feature that a terminal device cannot read a system message in connected mode to reduce power consumption in an IoT network, so that a PUR mode in the IoT network is applied to the satellite communication. When a large amount of uplink data is transmitted, a problem of an uplink failure caused by expiration of a system message or expiration of GNSS information is effectively resolved.

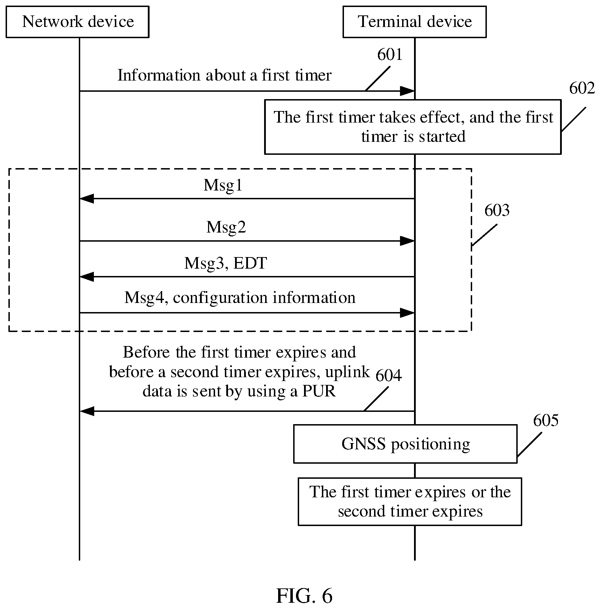

FIG. 6 is another schematic diagram of a scenario of a satellite communication method according to an embodiment of this application. As shown in FIG. 6, the method includes the following steps.

601: A network device sends information about a first timer to a terminal device. Correspondingly, the terminal device receives the information about the first timer.

602: The first timer takes effect, and the terminal device starts the first timer.

603: The terminal device initiates a four-step random access process.

In this embodiment of this application, the terminal device initiates the random access process by using the foregoing EDT as an example. For example, a Msg3 may carry uplink data. For example, the terminal device may upload the uplink data in the Msg3. For example, the terminal device may send the uplink data based on a repetition quantity.

In this embodiment of this application, configuration information may be included in a Msg2 or a Msg4. The Msg4 is used as an example in FIG. 6, and should not be understood as a limitation on embodiments of this application. For example, the network device Msg4 includes related information of a subsequent PUR. For example, the related information of the PUR includes a parameter like a reserved resource or duration of a second timer. It may be understood that for other descriptions of the four-step random access process, refer to the method shown in FIG. 3, or refer to a related standard or protocol. Details are not described herein again.

604: Before the first timer expires or before the second timer expires, the terminal device sends the uplink data by using the PUR.

For example, after receiving the Msg4, the terminal device may complete sending of the uplink data on the reserved resource.

605: The terminal device performs GNSS positioning.

Before the first timer expires or the second timer expires, the terminal device performs GNSS positioning. It may be understood that for specific descriptions of step 604 and step 605, refer to FIG. 4, FIG. 5a, or the like. Details are not described herein again.

For example, the network device may select a rollback manner based on a status of data sent by the terminal device in the uplink. For example, the rollback manner includes a four-step random access manner, a two-step random access manner, or an EDT manner. For example, the terminal device may select the rollback manner based on indication information of the network device. For another example, the terminal device may select the rollback manner based on a channel quality status. If the channel quality is good, the terminal device may use the EDT manner. For another example, if the channel quality is poor, the terminal device may use four-step random access or two-step random access. For another example, the terminal device may select the rollback manner based on a relative location relationship between the terminal device and the network device. For example, if a relative location between the terminal device and the network device is close, the terminal device may use the EDT or four-step random access. It may be understood that a specific method for selecting the rollback manner by the terminal device is not limited in embodiments of this application.

It may be understood that, for parts that are not described in detail in the method shown in FIG. 6, refer to FIG. 4, FIG. 5a, or the like. Details are not described herein again.

In the method shown in FIG. 5a or FIG. 5b, when the terminal device in connected mode does not transmit the uplink data completely, the terminal device can continue to send, in idle mode, the data that is not completely sent by using a combination of the first timer and the second timer. The method shown in FIG. 6 effectively combines EDT transmission, so that the terminal device in idle mode can complete sending of all uplink data. In addition, the terminal device always has an opportunity to read a system message, and this reduces a probability of a radio link failure.

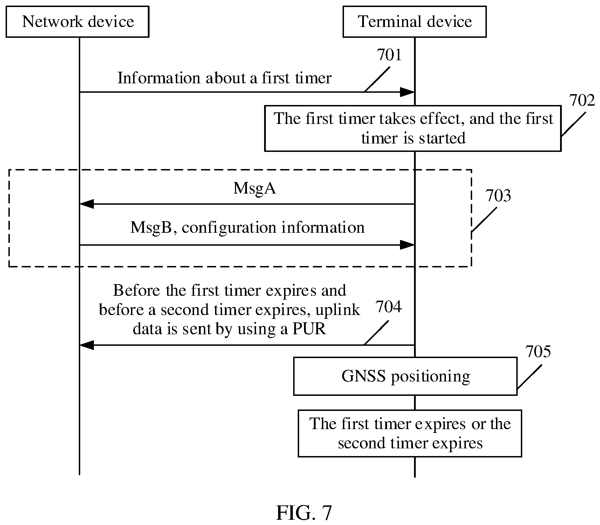

FIG. 7 is still another schematic diagram of a scenario of a satellite communication method according to an embodiment of this application. As shown in FIG. 7, the method includes the following steps.

701: A network device sends information about a first timer to a terminal device. Correspondingly, the terminal device receives the information about the first timer.

702: The first timer takes effect, and the terminal device starts the first timer.

703: The terminal device initiates a two-step random access process.

For example, the terminal device may send a preamble and uplink data in a MsgA. If the network device correctly receives a Msg2, the network device may include related information of a PUR in a MsgB. For example, the related information of the PUR includes a parameter like a reserved resource or duration of a second timer.

If the network device does not correctly receive the Msg2, for example, the network device detects the preamble but does not correctly parse out a data part in the MsgA, the network device may notify, by using the Msg2, the terminal device to perform a four-step random access process, for example, notify the terminal device to continue to send a Msg3 to complete the random access process.

For example, if the terminal device falls back to the Msg3, there may be the following two implementations.

### Implementation 1:

The terminal device sends the Msg3 to the network device, and after receiving the Msg3, the network device sends a Msg4 to the terminal device. After receiving the Msg4, the terminal device establishes an RRC connection to enter connected mode for data transmission (for example, the terminal device may send uplink data to the network device). The second timer is started within effective duration of the first timer, and the uplink data is sent by using the PUR before the first timer expires and before the second timer expires. It may be understood that for specific descriptions of the implementation 1, refer to the method shown in FIG. 4, FIG. 5a, FIG. 5b, or the like. Details are not described herein again.

### Implementation 2:

The terminal device sends the Msg3 to the network device. After receiving the Msg3, the network device sends a Msg4 to the terminal device. The Msg4 may include configuration information. It may be understood that the Msg3 may include the uplink data. Therefore, before the first timer expires and before the second timer expires, the terminal device sends the uplink data by using the PUR. It may be understood that before sending the uplink data by using the PUR, the terminal device may complete GNSS positioning, and obtain updated ephemeris information, updated common TA information, or duration of the first timer. Alternatively, after sending the uplink data by using the PUR, the terminal device may complete GNSS positioning, and obtain updated ephemeris information, updated common TA information, or duration of the first timer. It may be understood that for specific descriptions of the implementation 2, refer to the method shown in FIG. 4 or FIG. 6. Details are not described herein again.

704: Before the first timer expires or before the second timer expires, the terminal device sends the uplink data by using the PUR.

705: The terminal device performs GNSS positioning.

According to the method provided in this embodiment of this application, a PUR mode, the EDT, and two-step random access are combined, so that the terminal device in idle mode can complete sending of all uplink data. In addition, the terminal device always has an opportunity to read a system message, and this reduces a probability of a radio link failure.

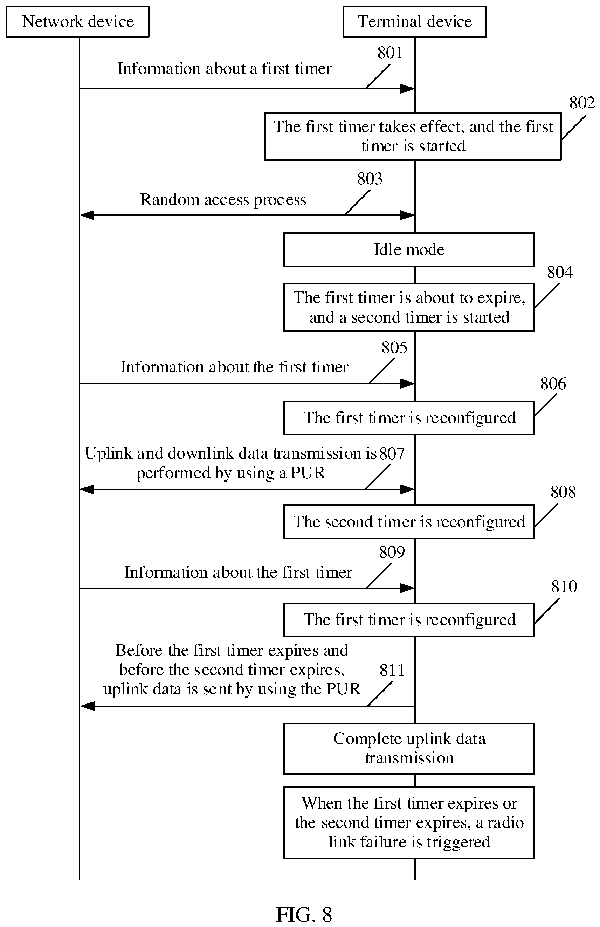

With reference to the random access processes shown in FIG. 6 and FIG. 7, an embodiment of this application further provides a schematic diagram of a scenario of a satellite communication method. As shown in FIG. 8, the method includes the following steps.

801: A network device sends information about a first timer to a terminal device. Correspondingly, the terminal device receives the information about the first timer.

802: The first timer takes effect, and the terminal device starts the first timer.

803: The terminal device initiates a random access process.

804: The first timer is about to expire, and the second timer is started.

805: The network device sends the information about the first timer to the terminal device. Correspondingly, the terminal device receives the information about the first timer.

806: The first timer is reconfigured.

807: Uplink and downlink data transmission is performed between the terminal device and the network device by using the PUR.

For example, the terminal device sends uplink data by using the PUR, and the network device sends downlink data by using the PUR.

808: The second timer is reconfigured.

For example, if the terminal device receives new closed-loop TAC information, the second timer may be reconfigured, and the closed-loop TAC information is used to compensate for timing advance. It may be understood that for descriptions of the closed-loop TAC information, refer to a related standard, protocol, or the like. Details are not described herein again.

809: The network device sends the information about the first timer to the terminal device. Correspondingly, the terminal device receives the information about the first timer.

810: The first timer is reconfigured.

811: Before the first timer expires and before the second timer expires, uplink data is sent by using a PUR.

It may be understood that for specific descriptions of step 801 to step 803, refer to the four-step random access shown in FIG. 6, or refer to the two-step random access shown in FIG. 7. For specific descriptions of step 804 to step 806 and step 809 to step 811, refer to the satellite communication method shown in FIG. 5a or FIG. 5b. Details are not described herein again.

It may be understood that, in the foregoing embodiments, if the terminal device does not complete reading of ephemeris information before the first timer expires or before the second timer expires (for example, may also be referred to as time of resource reservation), GNSS positioning, or the like, the terminal device may directly trigger a radio link failure. For example, the network device listens to an uplink signal in expected time (for example, on an expected reserved resource). If the network device always does not receive the uplink signal from the terminal device in the expected time, the network device may alternatively trigger the radio link failure.

It may be understood that, in the foregoing embodiment, when duration of the first timer is determined based on a smallest value of effective duration corresponding to the ephemeris information, effective duration corresponding to the common TA information, and effective duration corresponding to the GNSS, it indicates that the second timer needs to take effect before any timer expires (for example, related information of the PUR needs to be configured before any timer expires). However, this embodiment of this application further provides an implementation, for example, the GNSS, the ephemeris information, or the common TA information is separately considered. In consideration of the effective duration (which may also be referred to as a validity period) of the GNSS, effective duration of the ephemeris information may be different from effective duration of the common TA information. For example, after the terminal device reports the effective duration of the GNSS, the network device may learn of time at which the terminal device re-performs GNSS positioning. Therefore, when the GNSS is ineffective, but the ephemeris information and the common TA information are still effective, the terminal device may alternatively not listen to a system message. The network device may reserve a time resource (for example, a GNSS time window) for the terminal device based on the effective duration of the GNSS reported by the terminal device, to ensure that the terminal device performs GNSS positioning. After the GNSS time window ends, the terminal device continues to perform data communication in connected mode. Before a timer corresponding to the ephemeris information or the common TA information expires, the network device may configure information about the PUR for the terminal device.

Optionally, the network device may reserve, based on the effective duration of the ephemeris information or the effective duration of the common TA information, a time window for the terminal device to read the system message (it is assumed that the system message is a special system message, and may be read in a transmission process). In this way, the terminal device continues communication after receiving an updated system message. Before a timer corresponding to the GNSS expires, the network device may configure information about the PUR for the terminal device.

It may be understood that, in the embodiment shown in this application, a reserved resource of the PUR may be periodic or aperiodic, and the terminal device may initiate non-contention-based random access on the resource of the PUR. A reserved resource interval may be determined based on a periodicity of a current satellite serving the area, or determined based on a time interval between a current satellite and a subsequent satellite serving the area. For example, the current satellite indicates synchronization information of a next satellite, including the ephemeris information and the common TA information, and configures, based on service time of a neighboring satellite for the area, a reserved resource of a PUR corresponding to the next satellite. The terminal device initiates non-contention-based random access or directly initiates data transmission on the resource of the PUR based on a configuration of a previous satellite.

A communication apparatus provided in an embodiment of this application is described below.

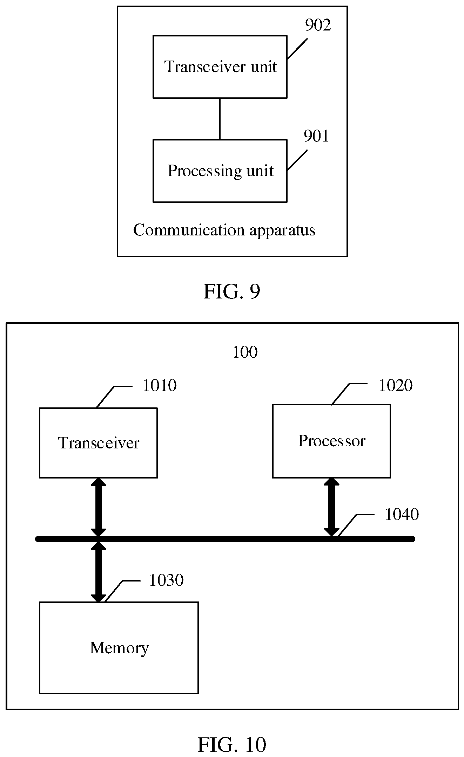

In this application, the communication apparatus is divided into function modules based on the foregoing method embodiments. For example, each function module may be divided to each corresponding function, or two or more functions may be integrated into one processing module. The integrated module may be implemented in a form of hardware, or may be implemented in a form of software functional module. It should be noted that, in this application, module division is an example, and is merely a logical function division. In practice, another division manner may be used. The following describes in detail the communication apparatuses in embodiments of this application with reference to FIG. 9 to FIG. 11.

FIG. 9 is a schematic diagram of a structure of a communication apparatus according to an embodiment of this application. As shown in FIG. 9, the communication apparatus includes a processing unit 901 and a transceiver unit 902.

In some embodiments of this application, the communication apparatus may be the terminal device shown above, a chip in the terminal device, or the like. In other words, the communication apparatus may be configured to perform steps, functions, or the like performed by the terminal device in the foregoing method embodiments.

For example, the processing unit 901 is configured to start a first timer.

The transceiver unit 902 is configured to receive configuration information from a network device, where the configuration information carries information about a preconfigured uplink resource PUR, the information about the PUR carries duration of a second timer, and effective time of the second timer is within effective duration of the first timer.

The transceiver unit 902 is further configured to: before the first timer expires and before the second timer expires, send uplink data by using the PUR.

It may be understood that the transceiver unit 902 is further configured to receive information about the first timer from the network device. For another example, the processing unit 901 is configured to: before the first timer expires and before the second timer expires, control the transceiver unit 902 to send the uplink data by using the PUR.

For example, the processing unit 901 is further configured to: when the second timer expires or the first timer expires, re-initiate a random access process if the configuration information is not received, or global navigation satellite system GNSS positioning is not completed, or updated ephemeris information and/or common timing advance TA information are/is not obtained.

It may be understood that the processing unit 901 may initiate a random access process by using the transceiver unit 902.

In this embodiment of this application, for descriptions of the information about the first timer, the first timer, the effective duration, the effective time, the second timer, and the like, refer to the descriptions in the foregoing method embodiments. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments (as shown in FIG. 4 to FIG. 8). Details are not described herein again.

FIG. 9 is reused. In some other embodiments of this application, the communication apparatus may be the network device shown above, a chip in the network device, or the like. In other words, the communication apparatus may be configured to perform steps, functions, or the like performed by the network device in the foregoing method embodiments.

The transceiver unit 902 is configured to send the information about the first timer.

The transceiver unit 902 is further configured to send configuration information, where the configuration information carries information about a preconfigured uplink resource PUR, the information about the PUR carries duration of a second timer, and effective time of the second timer is within effective duration of the first timer.

The transceiver unit 902 is further configured to receive the uplink data by using the PUR.

For example, the processing unit 901 is configured to determine the information about the first timer and the configuration information.

In this embodiment of this application, for descriptions of the information about the first timer, the first timer, the effective duration, the effective time, the second timer, and the like, refer to the descriptions in the foregoing method embodiments. Details are not described herein again.

It may be understood that specific descriptions of the transceiver unit and the processing unit described in this embodiment of this application are merely examples. For specific functions, steps, or the like of the transceiver unit and the processing unit, refer to the foregoing method embodiments (as shown in FIG. 4 to FIG. 8). Details are not described herein again.

The foregoing describes the terminal device and the network device in embodiments of this application. The following describes possible product forms of the terminal device and the network device. It should be understood that a product in any form that has the function of the terminal device in FIG. 9 or a product in any form that has the function of the network device in FIG. 9 falls within the protection scope of embodiments of this application. It should be further understood that the following description is merely an example, and the product forms of the terminal device and the network device in embodiments of this application are not limited thereto.

In a possible implementation, in the communication apparatus shown in FIG. 9, the processing unit 901 may be one or more processors. The transceiver unit 902 may be a transceiver, or the transceiver unit 902 may be a sending unit and a receiving unit. The sending unit may be a transmitter, and the receiving unit may be a receiver. The sending unit and the receiving unit are integrated into one component, for example, a transceiver. In this embodiment of this application, the processor and the transceiver may be coupled, or the like. A manner of connection between the processor and the transceiver is not limited in embodiments of this application.

As shown in FIG. 10, the communication apparatus 100 includes one or more processors 1020 and a transceiver 1010.

For example, when the communication apparatus is configured to perform the step, the method, or the function performed by the network device, the transceiver 1010 is configured to: send information about a first timer and configuration information; and receive uplink data by using a PUR.

For example, when the communication apparatus is configured to perform the step, the method, or the function performed by the terminal device, the transceiver 1010 is configured to receive the information about the first timer; the processor 1020 is configured to start the first timer; and the transceiver 1010 is configured to receive the configuration information, and send the uplink data by using the PUR.

In this embodiment of this application, for descriptions of the information about the first timer, the first timer, the effective duration, the effective time, the second timer, and the like, refer to the descriptions in the foregoing method embodiments (as shown in FIG. 4 to FIG. 8). Details are not described herein again.

It may be understood that for specific descriptions of the processor and the transceiver, refer to the descriptions of the processing unit and the transceiver unit shown in FIG. 9. Details are not described herein again.

In each implementation of the communication apparatus shown in FIG. 10, the transceiver may include a receiver and a transmitter. The receiver is configured to perform a receiving function (or operation), and the transmitter is configured to perform a transmitting function (or operation). The transceiver is configured to communicate with another device/apparatus through a transmission medium.

Optionally, the communication apparatus 100 may further include one or more memories 1030, configured to store program instructions and/or data. The memory 1030 is coupled to the processor 1020. The coupling in this embodiment of this application may be an indirect coupling or a communication connection between apparatuses, units, or modules in an electrical form, a mechanical form, or another form, and is used for information exchange between the apparatuses, the units, or the modules. The processor 1020 may cooperate with the memory 1030. The processor 1020 may execute the program instructions stored in the memory 1030. Optionally, at least one of the one or more memories may be included in the processor.

In embodiments of this application, a specific connection medium among the transceiver 1010, the processor 1020, and the memory 1030 is not limited. In an embodiment of this application, the memory 1030, the processor 1020, and the transceiver 1010 are connected through a bus 1040 in FIG. 10. The bus is represented through a bold line in FIG. 10. A connection manner of other components is merely an example for description and is not limited thereto. The bus may be classified into an address bus, a data bus, a control bus, and the like. For ease of representation, only one thick line is for representing the bus in FIG. 10, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In embodiments of this application, the memory may include but is not limited to a nonvolatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of instruction or data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

The processor 1020 is mainly configured to process a communication protocol and communication data, control the communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of electromagnetic wave. The input/output apparatus, like a touchscreen, a display, or a keyboard, is mainly configured to: receive data input by a user and output data to the user.

After the communication apparatus is powered on, the processor 1020 may read the software program in the memory 1030, interpret and execute instructions of the software program, and process the data of the software program. When data needs to be sent wirelessly, the processor 1020 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 1020. The processor 1020 converts the baseband signal into data, and processes the data.

In another implementation, the radio frequency circuit and the antenna may be disposed independently of the processor that performs baseband processing. For example, in a distributed scenario, the radio frequency circuit and the antenna may be disposed remotely and independently of the communication apparatus.

It may be understood that the communication apparatus described in embodiments of this application may further have more components than those in FIG. 10, and the like. This is not limited in embodiments of this application. The foregoing methods performed by the processor and the transceiver are merely examples. For specific steps performed by the processor and the transceiver, refer to the methods described above.

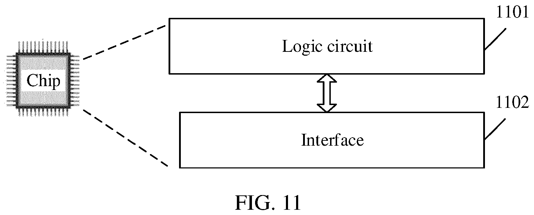

In another possible implementation, in the communication apparatus shown in FIG. 9, the processing unit 901 may be one or more logic circuits. The transceiver unit 902 may be an input/output interface that is also referred to as a communication interface, an interface circuit, an interface, or the like. Alternatively, the transceiver unit 902 may be a sending unit and a receiving unit. The sending unit may be an output interface, and the receiving unit may be an input interface. The sending unit and the receiving unit are integrated into one unit, for example, an input/output interface. As shown in FIG. 11, the communication apparatus shown in FIG. 11 includes a logic circuit 1101 and an interface 1102. In other words, the processing unit 901 may be implemented by using the logic circuit 1101, and the transceiver unit 902 may be implemented by using the interface 1102. The logic circuit 1101 may be a chip, a processing circuit, an integrated circuit, a system on chip (system on chip, SoC), or the like. The interface 1102 may be a communication interface, an input/output interface, a pin, or the like. For example, FIG. 11 is an example in which the foregoing communication apparatus is a chip. The chip includes the logic circuit 1101 and the interface 1102.

In embodiments of this application, the logic circuit and the interface may be further coupled to each other. A specific manner of connection between the logical circuit and the interface is not limited in embodiments of this application.

For example, when the communication apparatus is configured to perform the method, the function, or the step performed by the terminal device, the interface 1102 is configured to input information about a first timer; the logic circuit 1101 is configured to start the first timer; and the interface 1102 is further configured to input configuration information and output uplink data.

For example, when the communication apparatus is configured to perform the method, the function, or the step performed by the network device, the interface 1102 is configured to output the information about the first timer and the configuration information, and is further configured to input the uplink data.

For example, the logic circuit 1101 is configured to determine the information about the first timer and the configuration information. For example, the interface 1102 is further configured to output downlink data by using a PUR.

For specific implementations of embodiments shown in FIG. 11, refer to the foregoing embodiments. Details are not described herein again.

An embodiment of this application further provides a wireless communication system. The wireless communication system includes a terminal device and a network device. The terminal device and the network device may be configured to perform the method in any one of the foregoing embodiments.

In addition, this application further provides a computer program. The computer program is used to implement the operation and/or the processing performed by the terminal device in the method provided in this application.

This application further provides a computer program. The computer program is used to implement operations and/or processing performed by the network device in the method provided in this application.

The computer-readable storage medium stores computer code. When the computer code is run on a computer, the computer is enabled to perform the operation and/or the processing performed by the terminal device in the method provided in this application.

The computer-readable storage medium stores computer code. When the computer code is run on a computer, the computer is enabled to perform the operation and/or the processing performed by the network device in the method provided in this application.

This application further provides a computer program product. The computer program product includes computer code or a computer program. When the computer code or the computer program is run on a computer, the operation and/or the processing performed by the terminal device in the method provided in this application is performed.

This application further provides a computer program product. The computer program product includes computer code or a computer program. When the computer code or the computer program is run on a computer, the operation and/or the processing performed by the network device in the method provided in this application is performed.

In the several embodiments provided in this application, it should be understood that the disclosed system, apparatus, and method may be implemented in other manners. For example, the described apparatus embodiment is merely an example. For example, division into the units is merely logical function division and may be other division in practice. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of software product. The computer software product is stored in a storage medium and includes a plurality of instructions for instructing a computer device (which may be a personal computer, a server, or a network device) to perform all or some of the steps of the methods described in embodiments of this application. The readable storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A satellite communication method, wherein the method comprises:
starting a first timer;
receiving configuration information from a network device, wherein the configuration information carries information about a preconfigured uplink resource PUR, the information about the PUR carries duration of a second timer, and effective time of the second timer is within effective duration of the first timer; and
before the first timer expires and before the second timer expires, sending uplink data by using the PUR.

2. The method according to claim 1, wherein the first timer is any one in a timer set.

3. The method according to claim 2, wherein the timer set comprises any one or more of the following:
a timer corresponding to ephemeris information configured by the network device, a timer corresponding to common timing advance TA information configured by the network device, and a timer corresponding to a historical global navigation satellite system GNSS reported by a terminal device.

4. The method according to any one of claims 1 to 3, wherein the sending uplink data by using the PUR comprises:
sending the uplink data in idle mode by using the PUR.

5. The method according to any one of claims 1 to 4, wherein the configuration information is comprised in any one of higher layer signaling, a message Msg2, a message Msg4, or a message MsgB.

6. The method according to any one of claims 1 to 5, wherein the method further comprises:
when the second timer expires or the first timer expires, re-initiating a random access process if the configuration information is not received, or global navigation satellite system GNSS positioning is not completed, or updated ephemeris information and/or common timing advance TA information are/is not obtained.

7. The method according to any one of claims 3 to 6, wherein the ephemeris information and the common TA information are comprised in a same system message, or the ephemeris information and the common TA information are comprised in different system messages, or the ephemeris information and the common TA information are comprised in dedicated control signaling of the terminal device.

8. A satellite communication method, wherein the method comprises:
sending information about a first timer;
sending configuration information, wherein the configuration information carries information about a preconfigured uplink resource PUR, the information about the PUR carries duration of a second timer, and effective time of the second timer is within effective duration of the first timer; and
receiving uplink data by using the PUR.

9. The method according to claim 8, wherein the receiving uplink data by using the PUR comprises:
before the first timer expires and before the second timer expires, receiving the uplink data by using the PUR.

10. The method according to claim 8 or 9, wherein the first timer is any one in a timer set.

11. The method according to claim 10, wherein the timer set comprises any one or more of the following:
a timer corresponding to ephemeris information configured by a network device, a timer corresponding to common timing advance TA information configured by the network device, and a timer corresponding to a historical global navigation satellite system GNSS reported by a terminal device.

12. The method according to any one of claims 8 to 11, wherein the configuration information is comprised in any one of higher layer signaling, a message Msg2, a message Msg4, or a message MsgB.

13. The method according to any one of claims 8 to 12, wherein the information about the first timer comprises the ephemeris information and/or the common TA information.

14. The method according to claim 13, wherein the ephemeris information and the common TA information are comprised in a same system message, or the ephemeris information and the common TA information are comprised in different system messages, or the ephemeris information and the common TA information are comprised in dedicated control signaling of the terminal device.

15. A communication apparatus, wherein the apparatus comprises:
a processing unit, configured to start a first timer; and
a transceiver unit, configured to receive configuration information from a network device, wherein the configuration information carries information about a preconfigured uplink resource PUR, the information about the PUR carries duration of a second timer, and effective time of the second timer is within effective duration of the first timer; and
the transceiver unit is further configured to: before the first timer expires and before the second timer expires, send uplink data by using the PUR.

16. The apparatus according to claim 15, wherein the first timer is any one in a timer set.

17. The apparatus according to claim 16, wherein the timer set comprises any one or more of the following:
a timer corresponding to ephemeris information configured by the network device, a timer corresponding to common timing advance TA information configured by the network device, and a timer corresponding to a historical global navigation satellite system GNSS reported by the communication apparatus.

18. The apparatus according to any one of claims 15 to 17, wherein the transceiver unit is specifically configured to send the uplink data in idle mode by using the PUR.

19. The apparatus according to any one of claims 15 to 18, wherein the configuration information is comprised in any one of higher layer signaling, a message Msg2, a message Msg4, or a message MsgB.

20. The apparatus according to any one of claims 15 to 19, wherein
the processing unit is further configured to: when the second timer expires or the first timer expires, re-initiate a random access process if the configuration information is not received, or global navigation satellite system GNSS positioning is not completed, or updated ephemeris information and/or common timing advance TA information are/is not obtained.

21. The apparatus according to any one of claims 17 to 20, wherein the ephemeris information and the common TA information are comprised in a same system message, or the ephemeris information and the common TA information are comprised in different system messages, or the ephemeris information and the common TA information are comprised in dedicated control signaling of the communication apparatus.

22. A communication apparatus, wherein the apparatus comprises:
a transceiver unit, configured to send information about a first timer, wherein
the transceiver unit is further configured to send configuration information, wherein the configuration information carries information about a preconfigured uplink resource PUR, the information about the PUR carries duration of a second timer, and effective time of the second timer is within effective duration of the first timer; and
the transceiver unit is further configured to receive uplink data by using the PUR.

23. The apparatus according to claim 22, wherein the transceiver unit is specifically configured to: before the first timer expires and before the second timer expires, receive the uplink data by using the PUR.

24. The apparatus according to claim 22 or 23, wherein the first timer is any one in a timer set.

25. The apparatus according to claim 24, wherein the timer set comprises any one or more of the following:
a timer corresponding to ephemeris information configured by the communication apparatus, a timer corresponding to common timing advance TA information configured by the communication apparatus, and a timer corresponding to a historical global navigation satellite system GNSS reported by a terminal device.

26. The apparatus according to any one of claims 22 to 25, wherein the configuration information is comprised in any one of higher layer signaling, a message Msg2, a message Msg4, or a message MsgB.

27. The apparatus according to any one of claims 22 to 26, wherein the information about the first timer comprises the ephemeris information and/or the common TA information.

28. The apparatus according to claim 27, wherein the ephemeris information and the common TA information are comprised in a same system message, or the ephemeris information and the common TA information are comprised in different system messages, or the ephemeris information and the common TA information are comprised in dedicated control signaling of the terminal device.

29. A communication apparatus, comprising a processor and a memory, wherein
the memory is configured to store instructions; and
the processor is configured to execute the instructions, to perform the method according to any one of claims 1 to 14.

30. A communication apparatus, comprising a logic circuit and an interface, wherein the logic circuit is coupled to the interface; and
the interface is configured to input to-be-processed data, the logic circuit processes the to-be-processed data according to the method according to any one of claims 1 to 14, to obtain processed data, and the interface is configured to output the processed data.

31. A computer-readable storage medium, wherein the computer-readable storage medium is configured to store a computer program, and when the computer program is executed, the method according to any one of claims 1 to 14 is performed.

32. A communication apparatus, comprising a processor, wherein the processor is configured to execute instructions, to perform the method according to any one of claims 1 to 14.

33. A communication apparatus, comprising a processor and a transceiver, wherein
the transceiver is configured to receive a signal or send a signal; and
the processor is configured to perform the method according to any one of claims 1 to 14.

34. A computer program product comprising instructions, wherein when the instructions are permitted on a computer, the method according to any one of claims 1 to 14 is performed.

35. A communication system, wherein the system comprises a terminal device and a network device, the terminal device is configured to perform the method according to any one of claims 1 to 7, and the network device is configured to perform the method according to any one of claims 8 to 14.
